# DEMANDE DE BREVET EUROPEEN

(11) **EP 0 536 047 A1**
(43) Date de publication de la demande: **07.04.1993**
(21) Numéro de dépôt: 92402682.6
(22) Date de dépôt: 02.10.1992
(51) Int. Cl.: F16K 1/34, F16K 1/30

(54) **Obturateur hémisphérique et creux pour un clapet**

(30) Priorité: 03.10.1991 FR 9112166
(71) Demandeur: Antonissamy, Pierre, F-95100 Argenteuil (FR); Antonissamy, Philippe, F-95100 Argenteuil (FR)
(72) Inventeur: Antonissamy, Pierre, F-95100 Argenteuil (FR); Antonissamy, Philippe, F-95100 Argenteuil (FR)

(57) **Abrégé**

Cet ensemble s'applique dans tous les domaines qui nécessitent l'écoulement d'un fluide avec contrôle d'ouverture/fermeture (réceptacles, canalisation...)

Ce dispositif (Fig 1) se compose d'un clapet mobile (3) en matériau d'étanchéité actionné par une tige de commande.

L'ensemble se caractérise par la forme hémisphérique du porte clapet (4) et du siège du clapet (Fig 1 B).

L'ensemble présente au contact une grande surface, en pression ainsi qu'une limitation du couple de serrage par contact métal-métal.

## Description

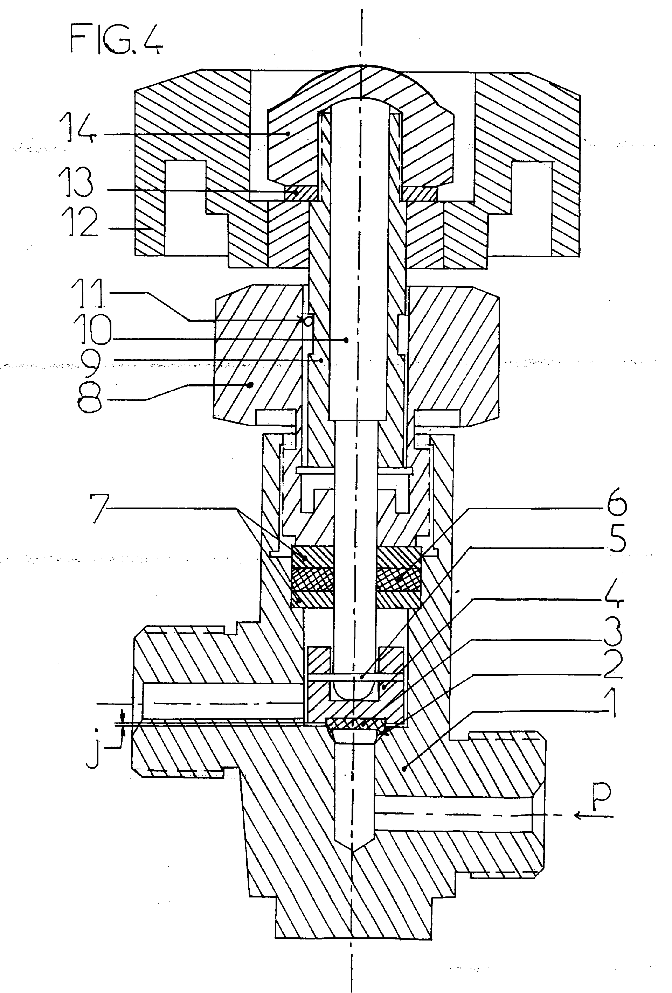

La présente invention concerne uniquement la fermeture ouverture hémisphérique du clapet mobile creux sur son siège (Fig 4).

Elle peut ête appliquée à tout passage de fluide, notamment au robinet de bouteille de gaz sous pression et autres récipients.

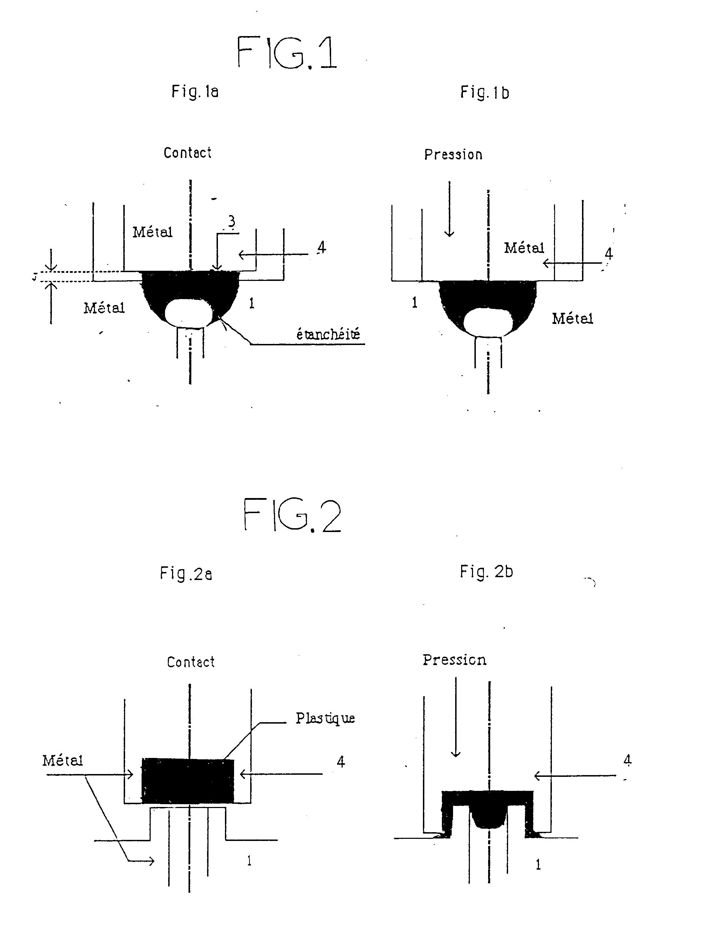

Selon une technique connue (Fig. 2A, 2B), la portée mobile du clapet de forme cylindrique lors du contact (Fig 2A) se déforme en pression (Fig 2B) et s'encastre sur le siège :
l'inconvénient est la création d'un couple trop puissant pour assurer l'étanchéité.

Pour pallier cet inconvénient, l'invention propose d'utiliser une portée mobile de forme hémisphérique creuse (Fig 1A, 1B) : lors de l'application de la pression, la surface de contact est très nettement agrandie et par suite de sa forme amène un contact beaucoup plus étroit.

En position fermeture, la pression P arrivant par l'entrée inférieure agit sur la cavité du clapet et plaque le matériau d'étanchéité sur le siège augmentant l'étanchéité.

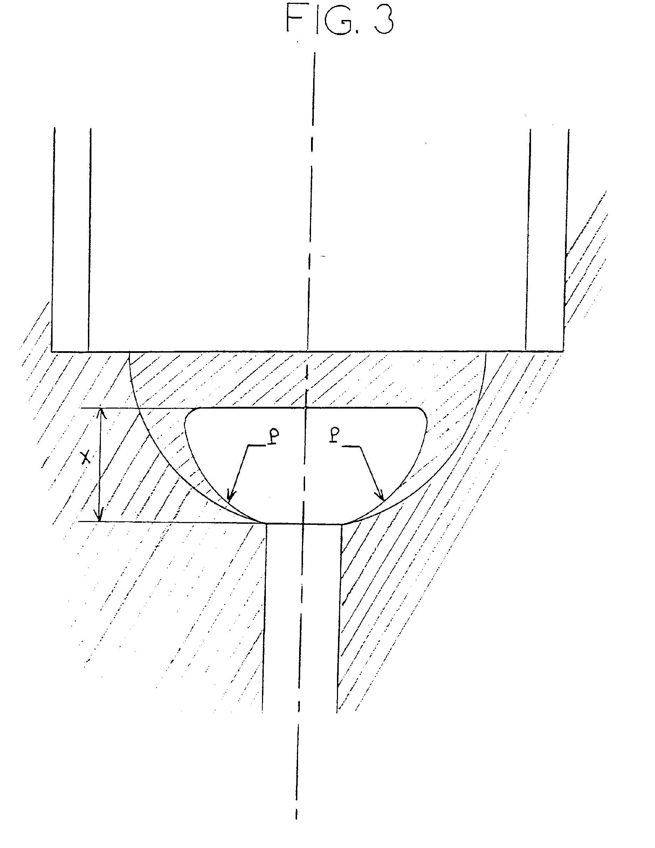

La cote X est fonction des dimensions du clapet (Fig 3).

De plus, le couple de serrage ne peut avoir aucune influence étant donné que les parties métalliques du porte clapet et du corps viennent au contact.

Un jeu (j) de hauteur variable avec le matériau d'étanchéité compris entre 1/10 et 1/1mm est prévu entre le clapet mobile le siège, manuellement, par prise en compte et est annulé lors du serrage.

Le matériau d'étanchéité peut varier selon la nature des fluides concernés, par exemple de type TEFLON.

L'invention sera mieux comprise à l'aide des figures 3 et 4, représentant la disposition en coupe, donné à titre d'exemple et des élements descriptifs qui suivent :

Le robinet comporte un corps destiné à être fixé sur un récipient ou tuyauterie avec passage d'écoulement de gaz équipé d'un clapet hémisphérique creux qui est rendu solidaire d'une tige de commande par l'intermédiaire d'une goupille.

L'invention est caractérisée essentiellement par la forme hémisphérique creuse du clapet, déplacé manuellement dans le sens axial. Le robinet comporte un corps (1) dont le siège (2) est concave hémisphérique.

Sur ce corps est vissé un écrou serre joint (8) qui comprime entre deux rondelles (7) un joint (6) du type TEFLON.

A l'intérieur de cet écrou est vissé un guide de tige de commande (9) qui contient la tige de commande (10).

Cette tige de commande comporte en son extrémité un porte clapet (4) sur lequel est fixé le clapet (3) de forme hémisphérique convexe. L'ensemble formé du porte clapet et clapet est rendu solidaire à la tige de commande par une goupille (5).

La tige de commande est actionnée par un volant.

Ces deux pièces sont rendues solidaires par une rondelle (13) et un écrou (14). La goupille (11) limite le débattement en hauteur de la tige de commande.

Un tel dispositif assure une longévité de fonctionnement, une meilleure étanchéité car le couple de serrrage n'a pas d'influence sur le comportement du porte clapet (4) et du siège du clapet (2) Fig. 4.

Il trouve son application dans les vannes de robinetteries (récipients sous pression, canalisation...).

## Revendications

1. Ensemble d'ouverture/fermeture pour réceptacle et canalisation contenant des fluides, caractérisé en ce que la partie mobile de porte-clapet (4) ainsi que la siège (2) sont de forme hémisphérique et en ce que des moyens (12) sont prévus pour la commande du clapet (Fig 4).

2. Ensemble selon la revendication 1 caractérisé en ce que l'évidement du clapet améliore l'étanchéité en position fermeture.

3. Ensemble selon la revendication 1 caractérisé en ce que sur le corps (1) est vissé un écrou serre joint (8) comprimant entre deux rondelle un joint (6).

4. Ensemble selon la revendication 1 ou 2 caractérisé en ce que la tige de commande (10) actionnée par un guide (9) est munie à son extrémité du porte clapet (4) sur lequel est fixé le clapet (3).

5. Ensemble selon l'une des revendications précédentes caractérisé en ce que la goupille rend solidaire l'ensemble porte clapet (4)/tige de commande (10).

6. Ensemble selon l'une des revendications précédentes caractérisé en ce qu'un jeu de hauteur variable selon la nature du matériau d'étanchéité est prévu entre le clapet mobile (3) et le siège (2).
